# FASCICULE DE BREVET EUROPEEN

(11) **EP 2 639 031 B1**
(45) Date de publication et mention de la délivrance du brevet: **05.08.2015**
(21) Numéro de dépôt: 13305261.3
(22) Date de dépôt: 08.03.2013
(51) Int. Cl.: B29C 37/02, B29C 35/16

(54) **Dispositif et procédé de production d'un objet portant un orifice dont le bord périphérie de la coupe est net**
Vorrichtung und Verfahren zur Herstellung eines Gegenstands mit einer Öffnung, deren umlaufende Schnittfläche bündig ist
Device and method for producing an object having an opening in which the periphery of the cut is clean

(30) Priorité: 14.03.2012 FR 1252299
(43) Date de publication de la demande: 18.09.2013
(73) Titulaire: RPC Tedeco Gizeh, 67330 Bouxwiller (FR)
(72) Inventeur: Schmitt, Bernard, 67320 PFALZWEYER (FR); Leininger, Thierry, 67320 WEYER (FR)
(74) Mandataire: Nuss, Laurent

(56) Documents cités:
- DE-A1- 3 820 975
- GB-A- 832 738
- KEM: "(K)eine scharfe Sache", INTERNET CITATION, 8 mai 2006 (2006-05-08), pages 1-2, XP002616052, Extrait de l'Internet: URL:http://www.kem.de/kfztest/-/article/16 537493/26915834/(K)eine-scharfe-Sache/art_ co_INSTANCE_0000/maximized/ [extrait le 2011-01-10]
- Leister Process Technologies: "Automated deburring of plastic parts with hot air: Precise, sensitive and efficient", , septembre 2007 (2007-09), XP002682585, Extrait de l'Internet: URL:http://www.leister.com/uploads/pdf/en/ leister_deflashing_eng.pdf [extrait le 2012-08-30]
- Wikipedia: "Entgraten", , 21 août 2012 (2012-08-21), XP002682586, Extrait de l'Internet: URL:http://de.wikipedia.org/wiki/Entgraten [extrait le 2012-08-30]

## Description

La présente invention se rapporte au domaine des procédés et dispositifs de production d'objets moulés ou en matière injectée, et plus particulièrement au domaine des procédés et dispositifs de finition de ces objets.

La production d'objets moulés en grande quantité est opérée, selon un exemple de réalisation, par une introduction de matière dans des moules constitués d'une ou de plusieurs parties. Après l'étape de démoulage de l'objet, il est courant que celui-ci doive encore subir des étapes complémentaires avant d'aboutir au produit final. Ces étapes complémentaires de finition peuvent ainsi correspondre à un ou plusieurs perçages d'orifices au niveau de portions de l'objet où la matière moulée réalise une sorte d'opercule. Cet exemple d'étape complémentaire peut exister en particulier lorsque les objets produits présentent une forme spécifique au niveau d'au moins une partie de leur structure. Ainsi, suite à l'étape de formage, l'objet correspond à une structure qui présente la forme spécifique sans orifice d'écoulement.

Lors de la formation par perçage de l'orifice d'écoulement, il est important que le pourtour de l'orifice comporte une structure lisse propre afin d'assurer un écoulement du produit ou liquide au travers de cet orifice sans que l'orientation du flux n'en soit altérée. En effet, dans le cadre d'un processus de production industrielle, après plusieurs utilisation, l'outil de perçage de l'orifice peut être amené à s'émousser et le pourtour de l'orifice formé comporte alors des bavures qui, associées à la tension de surface d'un produit ou liquide en écoulement, dévient l'orientation du flux de ce produit ou liquide

Une étape complémentaire d'ébavurage pour la finition du produit est alors indispensable pour rendre le pourtour d'un orifice suffisamment lisse pour qu'il n'entraîne pas la déviation du produit ou liquide en écoulement. Cependant, une telle étape complémentaire d'ébavurage fait généralement intervenir un outil qui, à l'échelle industrielle, comme pour l'outil de perçage, peut être amenée à s'émousser et altérer la qualité de production de l'objet formé. Par ailleurs, lorsque l'orifice travaillé présente des dimensions particulièrement restreintes, éventuellement associées à une ou plusieurs contraintes d'espace lors de l'opération d'ébavurage, les outils actuels montrent une capacité de fonctionnement rapidement limitée.

Le document DE 3820975 propose des techniques alternatives d'ébavurage de perforations de films plastiques transparents en faisant intervenir un jet de vapeur, d'air chaud, de micro-ondes ou d'infrarouge projeté depuis le coté opposé au coté où la perforation a été effectuée. Toutefois, si ce document propose des techniques permettant d'effectuer une étape d'ébavurage sans contact, aucun élément ne permet d'orienter la mise en oeuvre de telles techniques et notamment leur optimisation en vue d'obtenir de façon fiable un objet comportant un orifice au pourtour lisse, de diamètre donné et calibré, qui puisse être reproductible

La présente invention a pour but de surmonter certains de ces inconvénients en proposant un procédé reproductible de perçage et de finition optimisé d'un orifice qui permette de s'affranchir de l'utilisation d'outils dégradables.

Cet objectif est atteint grâce à un procédé de production d'un objet portant un orifice dont le bord périphérique de la coupe est net, **caractérisé en ce que** le procédé comprend :
- une étape de calibrage du flux d'air destiné à l'ébavurage en ajustant le flux d'air soufflé au diamètre d'ébavurage recherché,
- une étape de positionnement de l'objet portant l'orifice en regard d'au moins une buse d'éjection d'air,
- une étape d'ébavurage de l'orifice par soufflage, au niveau de l'orifice à ébavurer, d'un flux d'air de température supérieure à la température de fusion du matériau constitutif de l'objet percé.

De même, l'invention concerne un dispositif de production d'un objet portant un orifice dont la périphérie de la coupe est nette et permettant la mise en oeuvre d'un procédé selon l'invention, **caractérisé en ce que** le dispositif comprend :
- au moins deux stations de traitement d'un objet et permettant la mise en oeuvre d'au moins une étape du procédé,
- un moyen de déplacement de l'objet en cours de production entre au moins deux stations de traitement,
- au moins une station d'ébavurage de l'orifice de l'objet intégrant au moins une buse d'éjection d'un flux d'air de température supérieure à la température de fusion du matériau constitutif de l'objet, la station d'ébavurage étant associée à un mécanisme de calibrage permettant de régler et contrôler, d'une part, le positionnement de la buse par rapport à l'orifice de l'objet à ébavurer et, d'autre part, la température de l'air en sortie de buse et la durée du soufflage.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

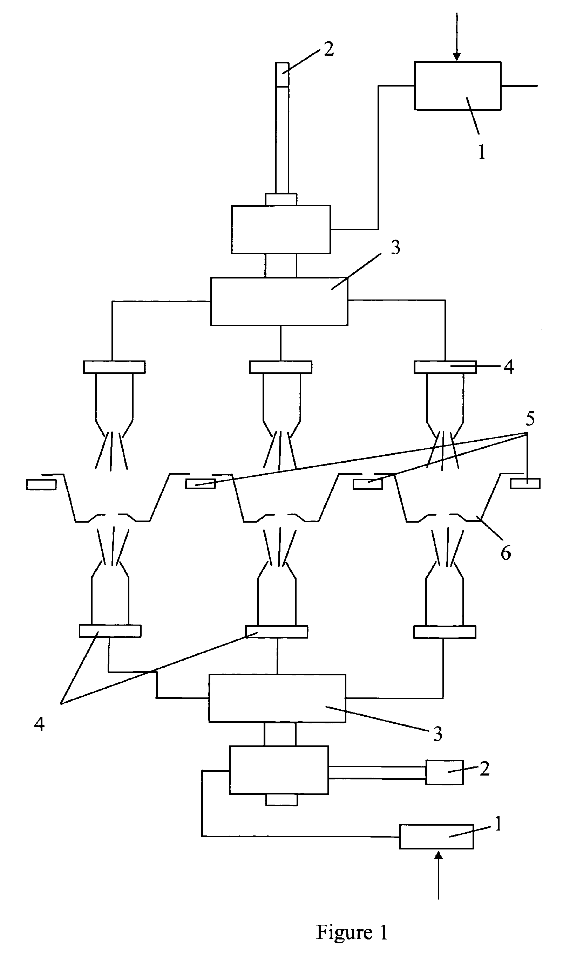

- la figure 1 se rapporte à un exemple de réalisation d'une station de refroidissement intégrée dans un dispositif selon l'invention.

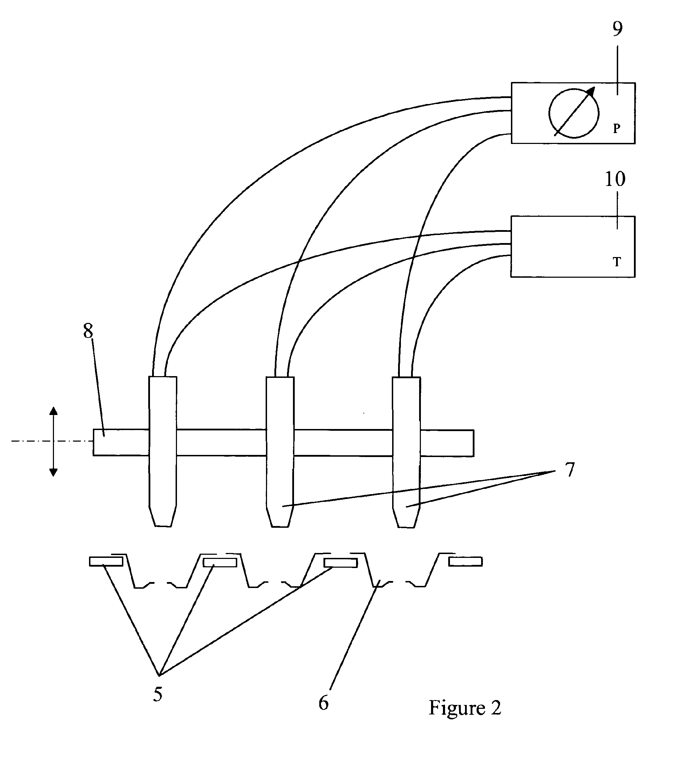

- la figure 2 se rapporte à un premier exemple de réalisation d'une station d'ébavurage permettant la mise en oeuvre d'au moins une partie du procédé de production selon l'invention,
- la figure 3 se rapporte à un second exemple de réalisation d'une station d'ébavurage permettant la mise en oeuvre d'au moins une partie du procédé de production selon l'invention.

Dans le présent document, il convient de comprendre le terme « air » comme se rapportant à tout gaz ou mélange de gaz susceptibles d'être chauffés et soufflés, voire comprimés, pour être utilisés dans le cadre de l'invention. A titre indicatif, l'azote et le dioxyde de carbone sont des gaz susceptibles d'être utilisés dans la mise en oeuvre de l'invention.

La présente invention se rapporte à un procédé pour produire un objet 6 réalisé en matière injectée, moulée, thermoformée, soufflée ou encore rotomoulée, par exemple en matière synthétique, portant un orifice dont la périphérie de la coupe est nette. Dans le présent document, le terme « coupe » doit être compris comme se rapportant à tout procédé permettant de réaliser une ouverture dans une paroi de l'objet moulé 6. Ce terme peut ainsi désigner un moyen de découpe de type emporte-pièce ou un moyen de perçage de type foret. Cette découpe peut également être réalisée par un moyen de découpe chauffé permettant une amélioration de la pénétration du moyen de découpe dans la structure en plastique lors du perçage. L'objet moulé 6 peut également être chauffé pour faciliter sa découpe. Préférentiellement, ce chauffage est réalisé de façon à atteindre une température sensiblement proche d'une température idéale de perforation. Le plastique fondu qui se trouve en périphérie de l'orifice découpé peut alors présenter des bavures à rectifier.

Selon l'invention, la netteté de la coupe est notamment obtenue par :
- une étape de calibrage du flux d'air destiné à l'ébavurage en ajustant le flux d'air soufflé au diamètre d'ébavurage recherché,
- une étape de positionnement de l'objet 6 portant l'orifice en regard d'au moins une buse d'éjection d'air,
- une étape d'ébavurage de l'orifice par soufflage, au niveau de l'orifice à ébavurer, d'un flux d'air de température supérieure à la température de fusion du matériau constitutif de l'objet 6 percé.

La température du flux d'air permettant l'étape d'ébavurage est déterminée en fonction des propriétés physiques particulières de la matière ou du matériau de l'objet travaillé. Toutefois, selon une particularité de réalisation, le flux d'air présente une température supérieure à la température de fusion du matériau utilisé, préférentiellement supérieure à la température de plastification du matériau et idéalement supérieure à une valeur adaptée au matériau mis en oeuvre pour permettre un ébavurage total sans déformation de l'orifice.

Selon une particularité de réalisation, la température de ce flux d'air ne doit pas non plus être supérieure à une température maximale, également définie selon les propriétés physiques particulières de la matière de l'objet 6 travaillé. En effet, une température trop importante risque d'entraîner une dégradation trop importante de l'orifice à ébavurer et d'altérer toute ou partie de la pièce 6 traitée.

L'opération de soufflage d'un flux d'air permet d'obtenir un ébavurage contrôlé par la température du flux d'air soufflé mais également par la puissance, l'orientation et le diamètre du flux d'air. Les capacités calorifuges peuvent également être fonction du type de gaz utilisé lors de cette opération de soufflage.

Le soufflage est effectué par une ou plusieurs buses de type canons à air chaud et arrangées de sorte que le flux d'air soit approprié au diamètre ou trou à ébavurer.

Selon une particularité de réalisation non-limitative du procédé de l'invention, ce procédé de production de l'invention comprend également, au préalable :
- une étape de moulage, d'injection et/ou tout autre procédé de formage d'un objet 6 par une structure adaptée,
- une étape de démoulage de l'objet 6,
- une étape de refroidissement de la zone de paroi au niveau de laquelle est destiné à être aménagé l'orifice, par soufflage d'au moins un flux d'air de température inférieure à la température de l'objet 6,
- une étape de perçage d'un orifice au niveau d'une paroi de l'objet (6) moulé/injecté.

Au cours de ces étapes préalables, il convient de noter que l'étape de refroidissement permet de rendre la structure de l'objet 6 démoulé suffisamment solidifiée pour que l'étape de perçage soit effectuée au niveau d'une paroi rigide et autorise une précision dans l'alésage.

Selon un mode de réalisation préféré, le soufflage au cours de l'étape de refroidissement est effectué au niveau de chacune des faces de la paroi de l'objet 6 destinée à comporter l'orifice. Un tel arrangement permet d'obtenir un refroidissement réalisé plus rapidement mais également de façon plus homogène dans l'épaisseur de l'objet 6 destinée à recevoir l'orifice. Selon une particularité, le flux d'air soufflé pour permettre le refroidissement présente une température inférieure à la température de figeage de la matière, préférentiellement inférieure à la température de condensation de l'humidité de l'air et idéalement inférieure à la température de résilience de la matière mise en oeuvre.

Selon une alternative de réalisation, le refroidissement ne fait intervenir aucun soufflage particulier de flux d'air sur la paroi de l'objet démoulé. Ce refroidissement est opéré par le transfert de chaleur entre l'objet 6 démoulé et l'air ambiant.

Selon une particularité non-limitative de l'invention, le procédé comprend une étape d'alignement de l'axe de l'orifice à ébavurer avec l'axe de soufflage du flux d'air de température supérieure à la température de fusion du matériau constitutif de l'objet 6 percé.

Selon un premier mode de réalisation, ce procédé est **caractérisé en ce qu'il** comprend un traitement simultané d'au moins deux objets 6 lors d'au moins une étape du procédé. Un exemple de réalisation consiste en ce qu'une pluralité d'objets 6 disposés selon un arrangement matriciel bidimensionnel est traité simultanément lors de la mise en oeuvre d'une ou de plusieurs étapes du procédé de l'invention.

Selon un second mode de réalisation, ce procédé est **caractérisé** en ce qu'il comprend un traitement successif et individuel de chacun des objets 6 lors d'au moins une étape du procédé.

Selon une particularité de réalisation du procédé, celui-ci comprend également une étape de calibrage de l'orifice à ébavurer. Cette étape de calibrage est opérée préalablement à l'étape de perçage. Le calibrage est effectué au moyen d'un flux d'air chaud provenant de la buse d'un canon à air chaud 7. Ce calibrage s'appuie sur la capillarité de l'air pour une pression, un volume et une température connue. Le flux d'air en sortie de buse est réalisé sous la forme d'un cône d'air. Les différentes sections parallèles de ce cône présentent des diamètres successifs qui diminuent depuis l'orifice de sortie de la buse vers l'extérieur. L'opération de calibrage est alors effectuée en approchant la buse de l'orifice de l'objet percé 6 à ébavurer jusqu'à une distance recherchée de sorte que la section du flux d'air au niveau de l'orifice à ébavurer corresponde au diamètre d'ébavurage recherché. La distance de rapprochement de la buse avec l'orifice à ébavurer est alors enregistrée.

De façon complémentaire, l'optimisation du calibrage peut être améliorée en intervenant sur la température de l'air en sortie de buse, ainsi que sur la durée de l'opération de soufflage du flux d'air par la buse.

L'invention porte également sur un dispositif de production d'un objet comportant un orifice dont un bord périphérique d'une coupe est obtenu net et permet la mise en oeuvre du procédé décrit précédemment ou d'une de ses variantes. Selon une particularité, ce dispositif de l'invention comprend :
- au moins deux stations de traitement d'un objet 6 et permettant la mise en oeuvre d'au moins une étape du procédé,
- un moyen de déplacement de l'objet 6 en cours de production entre au moins deux stations de traitement,
- au moins une station d'ébavurage de l'orifice de l'objet 6 intégrant au moins une buse d'éjection d'un flux d'air de température supérieure à la température de fusion du matériau constitutif de l'objet 6, la station d'ébavurage étant associée à un mécanisme de calibrage permettant de régler et contrôler, d'une part, le positionnement de la buse 7 par rapport à l'orifice de l'objet 6 à ébavurer et, d'autre part, la température de l'air en sortie de buse et la durée du soufflage.

Selon un exemple non limitatif de réalisation, le poste ou la station d'ébavurage de l'orifice de l'objet 6 comprend au moins un canon à air chaud 7 dont l'extrémité de la buse est destinée à être positionnée en regard de l'objet à ébavurer 6. Ce positionnement peut être assuré par un système moteur de déplacement 8, par exemple montée/descente, pour ajuster le canon à air chaud 7 par rapport à l'objet à ébavurer 6.

Le dispositif de l'invention intègre également un mécanisme de calibrage de la station d'ébavurage permet de régler et contrôler, d'une part, le positionnement de la buse par rapport à l'orifice de l'objet 6 à ébavurer et, d'autre part, la température de l'air en sortie de buse et la durée du soufflage.

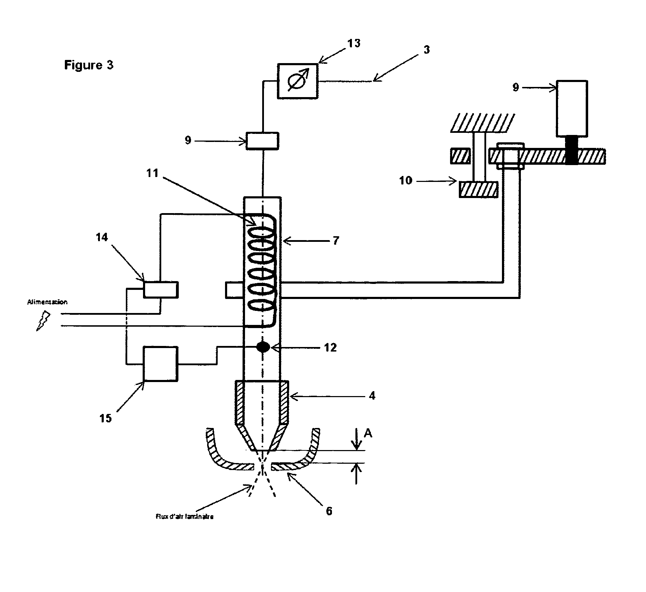

Selon une particularité de réalisation, le positionnement répété et successif d'une buse par rapport à des orifices d'objets à ébavurer est effectué par l'intermédiaire d'un mécanisme de va-et-vient 9 qui porte la buse d'éjection d'air et dont une extrémité de la course du va-et-vient est limitée par une butée de réglage 10. Un exemple de réalisation d'un tel dispositif est illustré sur la figure 3.

De plus, selon un mode de réalisation particulier, la température de l'air projeté par la buse peut être contrôlée par une résistance 11 associé à une sonde de température 12. De même, un débitmètre13 monté sur le circuit d'air permet une régulation du flux d'air projeté par la buse.

Selon une particularité de réalisation, le dispositif de production comprend également une station de coupe et/ou de perçage d'une paroi de l'objet 6 traité, cette station étant disposée en amont de la station d'ébavurage par rapport au sens de déplacement du moyen de déplacement. Le poste ou la station de coupe ou de perçage de l'orifice traité peut être intégré au dispositif de l'invention ou, alternativement, être indépendant et disposé à distance du dispositif de l'invention de sorte que le dispositif de l'invention est principalement orienté sur la réalisation de l'étape d'ébavurage.

Le dispositif de production fait ainsi intervenir plusieurs stations de traitement successives entre lesquelles est déplacé l'objet 6 en cours de production. Une ou plusieurs de ces stations de traitement permettent la mise en oeuvre d'une ou de plusieurs des étapes du procédé. Le moyen de déplacement 5 peut être de tout type connu. Il peut être un tapis roulant, par exemple un tapis grillagé, ou encore un moyen de préhension des objets 6 pour leur déplacement entre deux stations de traitement successives et leur positionnement au niveau de ces stations. Par ailleurs, le moyen de déplacement 5 peut être choisi pour assurer le transport simultané de plusieurs objets 6 en cours de production.

Selon une particularité de réalisation non-limitative de l'invention, le dispositif comprend également une station de refroidissement intégrant au moins une buse 4 de projection d'au moins un flux d'air de température inférieure à la température de l'objet 6. Selon un mode de réalisation particulier non-limitatif, lorsque plusieurs buses 4 de soufflage interviennent au niveau d'une même station, celles-ci sont chacune reliées à un répartiteur 3 qui assure une distribution contrôlée de l'air soufflé, le répartiteur pouvant être associé à une buse VORTEX 2 adaptée pour permettre une opération de soufflage et un répartiteur d'alimentation 1.

Pour rappel, une buse VORTEX 2 est une buse intégrant un conduit qui permet une production de froid et de chaud à partir d'air comprimé. L'air comprimé entre à grande vitesse en tourbillonnant autour d'un axe à l'intérieur d'un conduit pour réaliser un cyclone qui s'échauffe en frappant les parois du conduit et s'échappe au niveau d'une sortie « chaude ». Simultanément, l'air qui ne peut s'échapper au niveau de cette sortie « chaude » est refoulé vers l'intérieur par le centre du cyclone avec une vitesse plus faible pour rejoindre une sortie « froide ». Le différentiel de vitesse au niveau du cyclone occasionne également un échange de chaleur.

Selon un mode de réalisation particulier du dispositif de production, le moyen de déplacement est arrangé pour participer à la réalisation d'une ou de plusieurs étapes du procédé de production de l'invention. Par exemple, le moyen de déplacement peut être associé à la station de refroidissement en intégrant un ou plusieurs moyens de refroidissement à ce moyen de déplacement. Le moyen de déplacement peut ainsi être réalisé par un tapis roulant grillagé sur lequel sont disposés les objets 6 en cours de production. L'étape de refroidissement est alors effectuée par une ou plusieurs buses 4 positionnées de part et d'autre du moyen de déplacement. L'étape de refroidissement est alors réalisée concomitamment au déplacement des objets 6 entre deux stations ou postes de traitement du dispositif de l'invention.

Selon une spécificité non-limitative de cette particularité de réalisation, la station de refroidissement positionne au moins deux buses 4 de projection d'un flux d'air de part et d'autre de la paroi de l'objet 6 qui porte l'orifice. Ces buses peuvent alors être arrangées en regard l'une de l'autre de chaque coté de l'objet 6 qui porte l'orifice.

Selon un mode de réalisation préféré du dispositif de l'invention, ce dispositif intègre un moyen de gestion et de contrôle de la puissance, de la pression 9, de la durée et de la température 10 du flux d'air produit par au moins une des buses 4, 7 du dispositif.

## Revendications

1. Procédé de production d'un objet (6) portant un orifice dont le bord périphérique de la coupe est net, **caractérisé en ce que** le procédé comprend :
- une étape de calibrage du flux d'air destiné à l'ébavurage en ajustant le flux d'air soufflé au diamètre d'ébavurage recherché,
- une étape de positionnement de l'objet (6) portant l'orifice en regard d'au moins une buse (4, 7) d'éjection d'air,
- une étape d'ébavurage de l'orifice par soufflage, au niveau de l'orifice à ébavurer, d'un flux d'air de température supérieure à la température de fusion du matériau constitutif de l'objet (6) percé.

2. Procédé de production selon la revendication 1, **caractérisé en ce que** le procédé comprend également, au préalable :
- une étape de moulage, d'injection et/ou toute autre étape de formage d'un objet (6) par une structure adaptée,
- une étape de démoulage de l'objet (6),
- une étape de refroidissement de la zone de paroi au niveau de laquelle est destiné à être aménagé l'orifice, par soufflage d'au moins un flux d'air de température inférieure à la température de l'objet (6),
- une étape de perçage d'un orifice au niveau d'une paroi de l'objet (6) moulé/injecté.

3. Procédé de production selon la revendication 2, **caractérisé en ce que** l'étape de refroidissement du procédé est opérée par soufflage d'au moins un flux d'air au niveau de chacune des faces de la paroi de l'objet (6) destinée à comporter l'orifice.

4. Procédé de production selon une des revendications précédentes, **caractérisé en ce que** le procédé comprend une étape d'alignement de l'axe de l'orifice à ébavurer avec l'axe de soufflage du flux d'air de température supérieure à la température de fusion du matériau constitutif de l'objet (6) percé.

5. Procédé de production selon une des revendications précédentes, **caractérisé en ce que** le procédé comprend un traitement simultané d'au moins deux objets (6) lors d'au moins une étape du procédé.

6. Dispositif de production d'un objet (6) comportant un orifice dont un bord périphérique d'une coupe est obtenu net et permettant la mise en oeuvre d'un procédé selon une des revendications 1 à 5, **caractérisé en ce que** le dispositif comprend :
- au moins deux stations de traitement d'au moins un objet (6) et permettant la mise en oeuvre d'au moins une étape du procédé avant et après le poste de perçage,
- un moyen de déplacement de l'objet (6) en cours de production entre au moins deux stations de traitement,
- au moins une station d'ébavurage de l'orifice de l'objet (6) intégrant au moins une buse d'éjection (7) d'un flux d'air de température supérieure à la température de fusion du matériau constitutif de l'objet (6), la station d'ébavurage étant associée à un mécanisme de calibrage permettant de régler et contrôler, d'une part, le positionnement de la buse (7) par rapport à l'orifice de l'objet (6) à ébavurer et, d'autre part, la température de l'air en sortie de buse et la durée du soufflage.

7. Dispositif de production selon la revendication 6, **caractérisé en ce que** le dispositif comprend également une station de coupe et/ou de perçage d'une paroi de l'objet (6) traité, cette station étant disposée en amont de la station d'ébavurage par rapport au sens de déplacement du moyen de déplacement.

8. Dispositif de production selon la revendication 7 pour la mise en oeuvre d'un procédé selon au moins la revendication 2, **caractérisé en ce que** le dispositif comprend également une station de refroidissement intégrant au moins une buse (4) de projection d'au moins un flux d'air de température inférieure à la température de l'objet (6).

9. Dispositif de production selon la revendication 8, **caractérisé en ce que** la station de refroidissement positionne au moins deux buses (4) de projection d'un flux d'air en regard l'une de l'autre, de part et d'autre de la paroi de l'objet (6) qui porte l'orifice.

10. Dispositif de production selon une des revendications 6 à 9, **caractérisé en ce que** le dispositif intègre un moyen de gestion et de contrôle de la puissance, de la pression (9) de la durée et de la température (10) du flux d'air produit par au moins une des buses (4) du dispositif.

## Patentansprüche

1. Verfahren zur Herstellung eines Gegenstandes (6), der eine Öffnung umfasst, deren Umfangsrand des Einschnitts sauber ist, **dadurch gekennzeichnet, dass** das Verfahren umfasst:
- einen Schritt zum Kalibrieren des zur Entgratung vorgesehenen Luftstroms, indem der ausgeblasene Luftstrom an den angestrebten Entgratungsdurchmesser angepasst wird,
- einen Schritt zur Positionierung des Gegenstandes (6), der die Öffnung umfasst, bezüglich mindestens einer Luftauslassdüse (4, 7)
- einen Schritt zur Entgratung der Öffnung durch Anblasen im Bereich der zu entgratenden Öffnung mit einem eine Temperatur über der Schmelztemperatur des Materials, aus welchem der durchbrochene Gegenstand (6) gebildet ist, aufweisendem Luftstrom.

2. Verfahren zur Herstellung nach Anspruch 1, **dadurch gekennzeichnet, dass** das Verfahren im Vorfeld ferner umfasst:
- einen Schritt zum Gießen, zum Spritzen und/oder jeder andere Schritt zur Bildung eines Gegenstandes (6) durch Formanpassung,
- einen Schritt des Aus-der-Form-Nehmens des Gegenstandes (6),
- einen Schritt zur Abkühlung der Wandzone, im Bereich derer vorgesehen ist, die Öffnung anzuordnen, durch Anblasen mit mindestens einem eine Temperatur unter der Temperatur des Gegenstandes (6) aufweisendem Luftstrom,
- einen Schritt zur Durchbrechung einer Öffnung im Bereich einer Wand des gegossenen/gespritzten Gegenstandes (6).

3. Verfahren zur Herstellung nach Anspruch 2, **dadurch gekennzeichnet, dass** der Schritt zur Abkühlung des Verfahrens durchgeführt wird durch Anblasen mit mindestens einem Luftstrom im Bereich jeder Seite der Wand des Gegenstandes (6), die dafür vorgesehen ist, die Öffnung aufzuweisen.

4. Verfahren zur Herstellung nach einem der vorhergehenden Ansprüche, **dadurch gekennzeichnet, dass** das Verfahren einen Schritt zur Ausrichtung der Achse der zu entgratenden Öffnung mit der Anblasachse des Luftstroms, dessen Temperatur höher ist als die Schmelztemperatur des Materials, aus welchem der durchbrochene Gegenstand (6) gebildet ist, umfasst.

5. Verfahren zur Herstellung nach einem der vorhergehenden Ansprüche, **dadurch gekennzeichnet, dass** das Verfahren eine gleichzeitige Verarbeitung von mindestens zwei Gegenständen (6) während mindestens eines Schritts des Verfahrens umfasst.

6. Vorrichtung zur Herstellung eines Gegenstands (6), der eine Öffnung aufweist, bei welcher ein Umfangsrand eines Einschnitts sauber erhalten wird, wobei die Vorrichtung es erlaubt, ein Verfahren nach einem der Ansprüche 1 bis 5 durchzuführen, **dadurch gekennzeichnet, dass** die Vorrichtung aufweist:
- mindestens zwei Verarbeitungsstationen für mindestens einen Gegenstand (6), die es erlauben, mindestens einen Schritt des Verfahrens vor und nach der Durchbruchstation durchzuführen,
- ein Mittel zum Umsetzen des Gegenstands (6) während der Produktion zwischen mindestens zwei Behandlungsstationen,
- mindestens eine Station zur Entgratung der Öffnung des Gegenstands (6), welche mindestens eine Auslassdüse (7) für einen eine Temperatur über der Schmelztemperatur des Materials, aus welchem der Gegenstand (6) gebildet ist, aufweisendem Luftstrom beinhaltet, wobei die Station zur Entgratung einem Mechanismus zur Kalibrierung zugeordnet ist, der es erlaubt, einerseits die Anordnung der Düse (7) bezüglich der Öffnung des zu entgratenden Gegenstandes (6) und andererseits die Temperatur der aus der Düse austretenden Luft und die Dauer des Anblasens zu regeln und zu steuern.

7. Vorrichtung zur Herstellung nach Anspruch 6, **dadurch gekennzeichnet, dass** die Vorrichtung zugleich eine Station zum Schneiden und/oder Durchstoßen einer Wand des behandelten Gegenstandes (6) aufweist, wobei diese Station stromauf der Entgratungsstation bezüglich der Umsetzrichtung des Umsetzmittels angeordnet ist.

8. Vorrichtung zur Herstellung nach Anspruch 7 für die Durchführung eines Verfahrens nach zumindest dem Anspruch 2, **dadurch gekennzeichnet, dass** die Vorrichtung ferner eine Station zur Abkühlung aufweist, die mindestens eine Auslassdüse (4) für mindestens einen Luftstrom einer Temperatur unter der Temperatur des Gegenstandes (6) beinhaltet.

9. Vorrichtung zur Herstellung nach Anspruch 8, **dadurch gekennzeichnet, dass** die Station zur Kühlung mindestens zwei Auslassdüsen (4) für einen Luftstrom beidseitig der Wand des Gegenstands (6), der die Öffnung trägt, eine gegenüber der Anderen positioniert.

10. Vorrichtung zur Herstellung nach einem der Ansprüche 6 bis 9, **dadurch gekennzeichnet, dass** die Vorrichtung ein Mittel zur Bedienung und Steuerung der Kraft, des Drucks (9), der Dauer und der Temperatur (10) des Luftstroms beinhaltet, welcher von mindestens einer der Düsen (4) des Geräts erzeugt wird.

## Claims

1. Method for producing an object (6) bearing an opening in which the peripheral edge of the cut is clean, **characterized in that** the method comprises:
- a step of calibrating the air flow intended for deflashing by adjusting the blown air flow to the desired deflashing diameter,
- a step of positioning the object (6) bearing the opening opposite at least one air-ejection nozzle (4, 7),
- a step of deflashing the opening by blowing, onto the opening to be deflashed, an air flow whose temperature is greater than the melting point of the material constituting the pierced object (6).

2. Production method according to Claim 1, **characterized in that** the method also comprises, beforehand:
- a moulding or injection-moulding step and/or any other step of forming an object (6) by way of a suitable structure,
- a step of demoulding the object (6),
- a step of cooling the wall region in which the opening is intended to be made, by blowing at least one air flow whose temperature is less than the temperature of the object (6),
- a step of piercing an opening in a wall of the moulded/injection-moulded object (6).

3. Production method according to Claim 2, **characterized in that** the cooling step of the method is carried out by blowing at least one air flow onto each of the faces of the wall of the object (6) that is intended to comprise the opening.

4. Production method according to one of the preceding claims, **characterized in that** the method comprises a step of aligning the axis of the opening to be deflashed with the axis of blowing the air flow whose temperature is greater than the melting point of the material constituting the pierced object (6).

5. Production method according to one of the preceding claims, **characterized in that** the method comprises a simultaneous processing of at least two objects (6) during at least one step of the method.

6. Device for producing an object (6) comprising an opening in which a clean peripheral edge of a cut is obtained and allowing the implementation of a method according to one of Claims 1 to 5, **characterized in that** the device comprises:
- at least two stations for processing at least one object (6) and allowing the implementation of at least one step of the method before and after the piercing station,
- a means for moving the object (6) during production between at least two processing stations,
- at least one station for deflashing the opening in the object (6) incorporating at least one nozzle (7) for ejecting an air flow whose temperature is greater than the melting point of the material constituting the object (6), the deflashing station being combined with a calibrating mechanism making it possible to regulate and control, on the one hand, the positioning of the nozzle (7) with respect to the opening in the object (6) to be deflashed and, on the other hand, the temperature of the air leaving the nozzle and the duration of the blowing operation.

7. Production device according to Claim 6, **characterized in that** the device also comprises a station for cutting and/or piercing a wall of the processed object (6), this station being arranged upstream of the deflashing station with respect to the direction of movement of the movement means.

8. Production device according to Claim 7 for implementing a method according to at least Claim 2, **characterized in that** the device also comprises a cooling station incorporating at least one nozzle (4) for projecting at least one air flow whose temperature is less than the temperature of the object (6).

9. Production device according to Claim 8, **characterized in that** the cooling station positions at least two nozzles (4) for projecting an air flow opposite one another, on either side of the wall of the object (6) which bears the opening.

10. Production device according to one of Claims 6 to 9, **characterized in that** the device incorporates a means for managing and controlling the power, the pressure (9), the duration and the temperature (10) of the air flow produced by at least one of the nozzles (4) of the device.
